# EUROPEAN PATENT APPLICATION

(11) **EP 2 562 488 A1**
(43) Date of publication of application: **27.02.2013**
(21) Application number: 11179062.2
(22) Date of filing: 26.08.2011
(51) Int. Cl.: F24J 2/52

(54) **Holding device for holding a photovoltaic or solar collector module**

(71) Applicant: 3S Swiss Solar Systems AG, 3250 Lyss (CH)
(72) Inventor: Szacsvay, Tamás, 9479 Oberschan (CH)
(74) Representative: Patentbüro Paul Rosenich AG

(57) **Abstract**

The invention relates to a holding device (1) for holding a photovoltaic module (2) and/or a solar collector module on a structure, such as a roof, platform, base, or framework, the holding device (1) comprising a support (3) and at least one holding means (4) for holding the module (2) on the support (3), wherein the holding means (4) is adapted to receive an edge of the module (2), characterized in that the holding means (4) is formed by an U-shaped profile which is an integral part of the support (3).

## Description

The invention relates to a holding device for holding a photovoltaic module and/or a solar collector module and/or hybrid module on a structure, such as a roof, platform, base, or framework, the holding device comprises a support and at least one holding means for holding the module on the support, wherein the holding means is adapted to receive an edge of the module. It further relates to a method for mounting at least one photovoltaic module and/or a solar collector module on a holding device.

DE102009033039A1 discloses a holding device for holding photovoltaic modules in an inclined orientation. A support structure is formed by walls. The walls are built up by individual panels which are locked together. On the top of the support structure profiles are provided for receiving opposite edges of a photovoltaic module. The profiles are not part of the support structure and have to be mounted in a separate step when the photovoltaic module has been brought into its final position on the support structure. Such a system therefore requires multiple mounting steps and involves high costs of production.

DE102009021581A1 discloses a holding device for holding a solar module on a roof. A support which is formed by walls has in its top region a resting surface, on which the solar module rests in its mounted position. A mounting surface is provided above said resting surface and has holes for fixing a clamp, which in turn holds the solar module. The mounting procedure comprises multiple steps such a positioning and temporarily fixing the solar module in its final position; providing clamps and holding them in the correct position; and fixing the clamps with screws.

DE202008011501U1 discloses a mounting system for a solar module. In a first step rails are glued to the back surface of the solar module. The rails have horizontal slits in the edge region of the solar module. Then, the slits are brought into engagement with stationary mounting members, which extend into the slits, when the solar module is brought in its final position. Here, also a plurality of steps has to be performed for mounting the solar module. Particularly, the gluing of the rails on the solar module is a very time consuming process.

DE202009017846U1 discloses a mounting structure for mounting a photovoltaic module. The photovoltaic modules rest with its edges on a base element, which is arranged on the top of the mounting structure. This document does not teach in detail how to fix the photovoltaic module on the mounting structure.

DE202011001320U1 discloses a base frame for mounting photovoltaic modules. The frame comprises rafters and stringers. The stringers are formed by metallic hollow profiles that are clipped into openings of the rafters. Separate mounting means for mounting the photovoltaic modules to the stringers are provided on the top surface of the stringers. This document, however, does not teach the detailed structure of the mounting means.

The prior holding systems discussed above are characterized by complicated mounting procedures. Due to the plurality of separate elements which are required for mounting the photovoltaic module the costs of production of the mounting systems are high and the manipulation time for mounting is high.

The object of the present invention is to overcome these problems and to provide a holding device and a method for mounting a module, which eliminates the disadvantageous effects of prior art mounting systems.

The holding device shall further provide a simple and reliable module fixation, a fast installation of the module, an optimized use of materials, easy to manufacture and energy during production.

This object is achieved by a holding device, characterized in that the holding means is formed by an U-shaped profile which is an integral part of the support.

The inventive solution integrates two functions, support and fixation, in one compact part. I.e. the holding device integrates the fixation of the photovoltaic module in the body of the support structure (e.g. in one piece), and provides a simple solution for the fixing of modules, especially unframed modules (or more precisely, modules without the classic aluminum frame of the prior art).

Except from the U-Profile no further means are required to fixate the modules - according to the invention. The U-profiles hold the modules during use and no tools are required to fixate the modules.

The inventive solution allows simple and reliable module fixation without extra clamps, screws, etc. The inventive holding device is characterized by a low number of parts for holding and fixation of the modules. During production and installation an optimized use of materials and a reduction of embodied energy and fast installation procedure can be achieved. The holding device avoids visible fixation means, such as screws, clamps or separate profiles.

Usually, modules have frames to mechanically protect the edges. The inventive holding device, however, is suited for fixing both type of modules, modules with and without (metal) frames. In the latter case, the U-shaped profile may at least partially replace the functionalities of the frame: it mechanically protects the edges of the module and prevents water and damp from entering the module. If interconnecting means with supporting legs are used, all sides of the module may thus be protected.

In an embodiment the holding device comprises at least two holding means being arranged on the support opposed to each other as to receive opposing edges of a module. In this case opposing U-shaped profiles face each other with their openings. The module is reliably fixed from opposite sides and withstands strong winds and heavy loads, e.g. snow.

In an embodiment the holding means is continuously formed along the entire length of the support. The upper leg of the U-shaped profile covers the edge of the module completely. This may compensate for the absence of a frame which is otherwise integrally fastened to the module. The U-shaped profile then serves as protective cover. This embodiment is well suited to hold frameless modules, since the protective U-shaped profile compensates for a frame. It also withstands against wind pull and snow load.

In another embodiment holding means is intermittently formed along the length of the support. The U-shaped profile may not run over the complete length of the support: This makes manufacturing more easy because the parts that have to be bent in an U-shaped manner are smaller and water can run off the module unhindered. The growth of mosses near the edge of modules is an important factor for the degradation of the output of solar modules in the prior art. The sheet metal between the partial U-profiles may all be cut away to make the folding of the U-Profile even easier. Now only the C-Profile parts have to be bended to form a mirrored 'S', or a snake like structure.

In an embodiment the support is formed by walls and the holding means extends from the top edge of a wall. Here, four walls may enclose a volume, which is covered by the module. This allows to prevent wind from blowing below the module, otherwise causing mechanical stress to the mounting system.

In an embodiment the holding means is formed by one piece with the corresponding wall of the support. The idea is to use a holder for solar modules made of one piece of material, preferably sheet metal, that is formed to support and fix photovoltaic modules. Production costs may be thus remarkably reduced.

In an embodiment the holding means and the support are formed by one piece. In that case the whole holding device is formed by one piece.

In an embodiment the distance between the legs of the U-shaped profile is different for opposing holding means. With other words: one U-shaped profile may have a base wider than the thickness of the module. In this way the module may be inserted into that wider U-shaped profile while making a large angle with the plane going through the two U-shaped profiles.

In an embodiment the length of the legs of the U-shaped profile is different for opposing holding means and/or the two legs of an U-shaped profile are of different length. This also allows for an uncomplicated insertion of the module.

In an embodiment the holding means and the support are formed by sheet metal. This allows an easy, time and energy saving production.

In another embodiment the holding means and the support are formed by a cast element. Once a mold has been produced, it is very easy to reliably produce multiple holding devices.

In a further embodiment the support is deformable, preferably in the region of the holding means, for variably changing the position and/or orientation of the holding means, or wherein the holding means or a part thereof is deformable. This allows to easily mount the module. The holding means is - in a first step - brought into a position/orientation for easily receiving an edge of the module. While reaching the final position or at the final position of the module the holding means is moved (back) to its original/final position.

In an embodiment the wall, from which a holding means extends, has in its top region an - preferably inwardly - bent portion and the U-shaped profile of the holding means starts at the end of the bent portion of the wall, and preferably the bent portion and the U-shaped profile form a snake-like profile. The bent portion mechanically enforces the abutting surface (lower leg of the U-shaped profile) for abutting against the edges of the module. At the same time the production is facilitated, since the only processing step of these structure is bending.

In an embodiment the bent portion of the wall and the legs of the U-shaped profile of the holding means are essentially parallel to each other. This allows for a strong mechanical enforcement of the holding means.

The above objects are also achieved by a method for mounting at least one photovoltaic module and/or a solar collector module on a holding device according to any of the preceding claims, comprising the steps of: inserting a first edge of the module in a first U-shaped profile of the holding means; inserting a second edge of the module in a second U-shaped profile of the holding means, the second U-shaped profile being opposed to the first U-shaped profile; partially moving the module from the first U-shaped profile, preferably so that the second edge of the module abuts on the base of the second U-profile.

In an embodiment the U-shaped profiles of the holding means are positioned and/or oriented prior to inserting the edges of the module.

In an embodiment the modules are supported and/or held at all four edges.

In the case of multiple modules the method comprises the steps of:
installing or positioning the first and the second holding members;
inserting a module with its first edge in the first profile of the first holding means;
inserting a module with its second edge in the second profile of the second holding means;
partially removing the module from the first profile, preferably so that the second edge abuts on the base of the second profile;
repeating steps two thru four for multiple modules.

In the embodiment where the support is formed by walls the material serves at the same time as aerodynamic enclosure to minimize uplift forces induced by wind and at the same time the fixation is designed in such a way as to allow for a fixation without tools: no clamps, screws and the like are needed. The fixation is simply accomplished by two opposite U-profiles with the bottom parts of the 'U' being preferably further apart than the width of the module to be supported. In this way the module can be inserted in the upper profile, then in the lower profile and as it moves into the lower profile remains inside the upper profile

In an embodiment the holding device is adapted for holding photovoltaic modules with a first and a second opposing edge, the edges being at a first distance from each other, the holding means consisting of a first and a second member, respectively, containing a first and a second U-profile, their openings facing towards each other, the base of the U-profiles being spaced apart more than the first distance (between opposing edges of the module).

Preferably the support and/or the holding means is/are deformable such that the U-profiles can be spaced apart more that the first distance (between opposing edges of the module) and then bent back to a smaller distance.

In an embodiment the holding device comprises at least one interconnecting means for connecting two adjacent modules, the interconnecting means having supporting legs for supporting the edges of the adjacent modules.

In this embodiment the holding means on opposed sides may be connected by the interconnecting means in form of mechanical mountings. In this way, means are provided for interconnecting neighboring holding means containing the first U-profiles. Also, two opposing holding means, respectively, containing a first and a second U-shaped profile may be interconnected. Also a combination of these two types of interconnection is possible. Ideally these interconnection means serve the aesthetical and aerodynamic properties of the mounting. The interconnection means may also be an integral part of the walls and may support and/or hold the modules against wind lift.

In an embodiment a gap is formed below the U-shaped profile of the holding means and wherein the interconnecting means may be connected to the U-shaped profile by inserting a supporting leg at least partially into the gap. For example, there may be a gap between the inwardly bent portion of the walls and the adjacent leg of the U-shaped profile. The gap, in turn, may be used to receive the supporting leg(s) of the interconnection means inside.

In an embodiment the interconnecting means has an upwardly extending distance holding element for keep adjacent modules at a distance from each other.

In an embodiment the interconnecting means has a clips mechanism for receiving a cover element to be clipped to the interconnecting means. The cover element covers the edges of the modules.

In an embodiment, the holding device may comprise terminating parts. The ends of the rows of holding means may be terminated by terminating parts. Only the U-shaped profile or also the side of the module may be covered by such terminating parts. Preferably, the terminating part is such that the holding means together with the modules completely enclose the space under the modules so that wind cannot directly engage the modules from below. To even out pressure, the support, the holding means and/or the terminating parts may be provided with holes.

It is of course possible that the holding means extend over more than one photovoltaic module length or only over part of a module.

The support and/or the holding means may contain support means to serve as a cable support for the cables transporting the power generated by the photovoltaic system.

Preferably, the holding device may be of sheet metal or cast element support structure and preferably at least one holding means with its corresponding wall, from which it extends, consist of one piece of material.

If the holding device is casted in one or multiple parts, the U-shaped profile, interconnection means, cable holder and bottom fixation means may all be integrated in an easy manner.

Preferably, protection means are provided between the module and the holding means, which may be of metal. This protection may further seal the module against humidity. If the holding device is of plastic, this protection may not be needed.

The protection means may be attached to the module and/or to the holding device. Also the frame of the module may have this functionality. Ideally, the module has a plastic frame molded around it.

A cast polymer frame would eliminate the need for an edge protection for the module. This holds also for aluminum framed modules, but in this case the structural stability of the support and the frame are partly redundant.

Further embodiments of the invention are indicated in the figures and in the dependent claims. The list of reference marks forms part of the disclosure. The invention will now be explained in detail by the drawings. In the drawings:
Fig. 1 shows a holding device holding a photovoltaic device,
Fig. 2 shows in detail holding means on the support structure of the holding device,
Fig. 3 shows a holding device formed by walls,
Fig. 4 shows in a perspective view an embodiment of the holding device with intermittently arranged holding means,
Fig. 5 shows in more detail the holding means of the holding device of Fig. 3,
Fig. 6 shows in a sectional view an interconnecting means supporting adjacent modules,
Fig. 7 shows in a sectional view an interconnecting means supporting and holding modules against wind pull,
Fig. 8 shows in a perspective view the interconnecting means of Fig. 7,
Fig. 9 shows an arrangement with an interconnecting means of Fig. 7 prior to insertion into the gap formed below the U-shaped profile,
Fig. 10 shows a cut-out of a multiple module arrangement with interconnecting means and holding means in a top view.

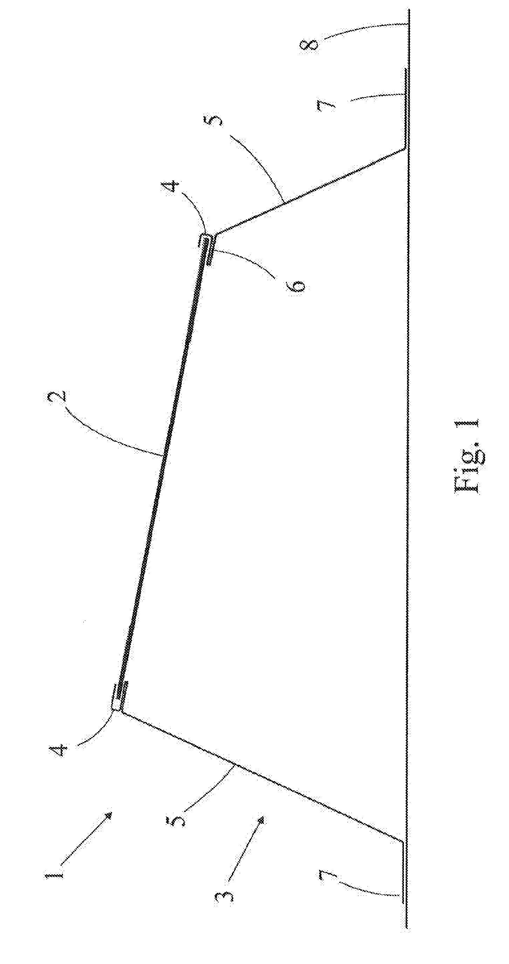

Fig. 1 shows on a flat roof 8 a holding device 1 for a photovoltaic module 2. The holding device 1 has a support 3, which is formed by walls 5, and holding means 4 at the top of the support 3. Opposing walls 5 of support 3 have different height, to hold the photovoltaic module in an inclined position. The walls 5 have at their lower end a mounting surface 7 which is outwardly bent and which allows the mounting of the support 3 on the roof 8 or any other construction, e.g. by means of screws, clamps, etc.

Holding means 4 constitute an integral part of the support 3 and extend from the top of the walls 5. Holding means 4 are formed by an U-shaped profile, wherein the edges of the module 2 are received by the space between the legs of the U-shaped profile. The edges of the module 2 rest on the lower leg of the U-shaped profile. It is not necessary, that the legs of the U-profile have the same length. For example, the lower leg may be longer to provide a stable abutting surface for the module 2.

In the preferred embodiment of Fig. 1 the holding device 1 comprises two holding means 4 being arranged on the support 3 opposed to each other as to receive opposing edges of the module 2. However, it is possible, to only provide U-shaped holding means 4 at one wall 5, e.g. the wall of lower height, and to use an alternate holding means at the opposing wall.

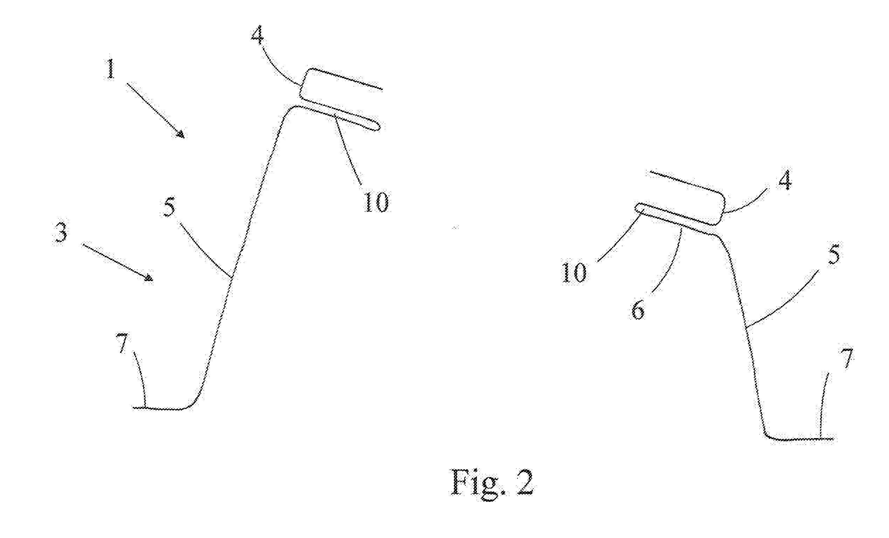

Fig. 2 shows the holding means 4 in more detail and without a photovoltaic module. The U-shaped profile is formed with the corresponding wall 5 by one piece. This may be e.g. easily accomplished by bending a sheet metal material. The wall 5 has in its top region an inwardly bent portion 6 and the U-shaped profile of the holding means 4 starts at the end of the inwardly bent portion 6 of the wall 5. Preferably, the inwardly bent portion 6 and the U-shaped profile form a snake-like profile. In the embodiment of Fig. 2 the inwardly bent portion 6 of the wall 5 and the legs of the U-shaped profile of the holding means 4 are essentially parallel to each other. In this embodiment there is a gap between the inwardly bent portion 6 of the wall 5 and the adjacent leg of the U-shaped profile of the holding means.

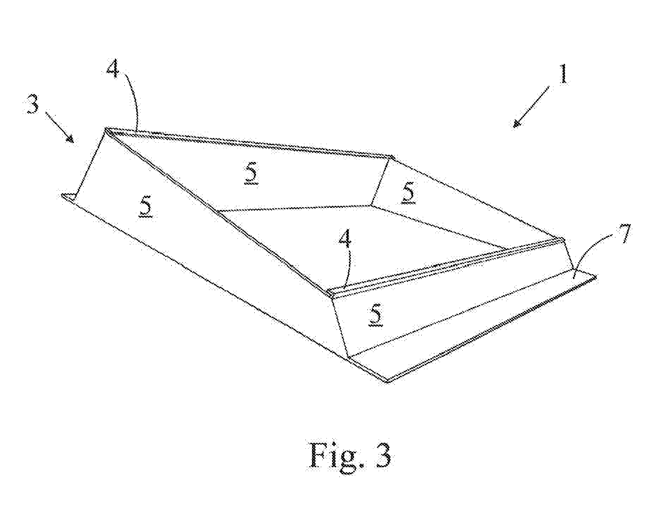

Fig. 3 shows a holding device 1 in a perspective view. As can be seen from this embodiment the holding means 4 continuously extends along the entire length of the wall 5 or support 3, respectively. The edges of the module 2 are entirely covered and efficiently protected by the holding means 4. The embodiment of Fig. 3 shows exemplarily a support which is formed by a cast element.

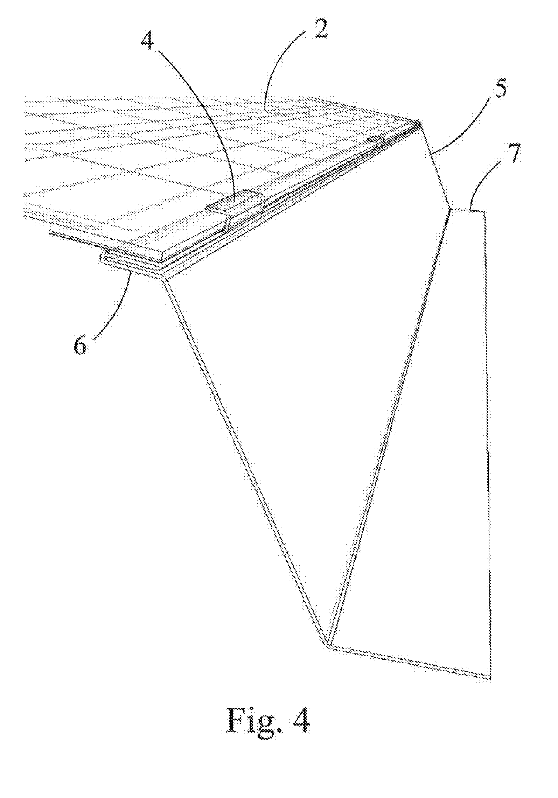

Fig. 4 shows an embodiment, wherein the holding means 4 is intermittently formed along the length of the wall 5 or support 3, respectively. Such an embodiment is well suited for modules having a frame, and/or to ease the run off of water and dirt.

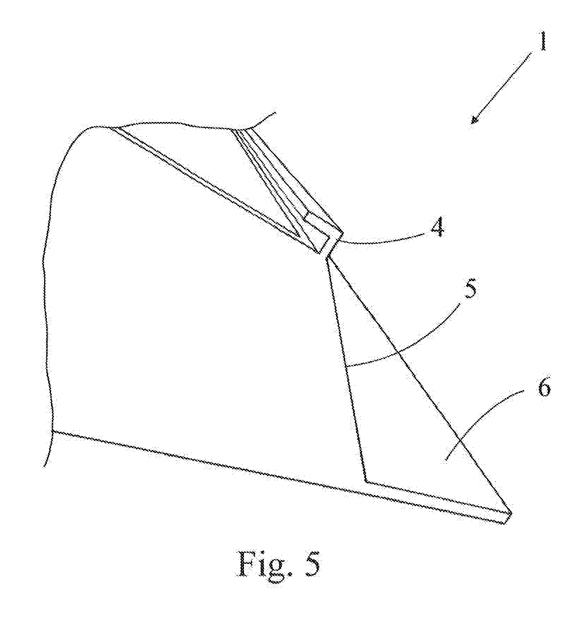

Fig. 5 shows in detail the U-shaped profile of the holding means 4. As can be seen the lower leg of the "U" is formed as an integral part of the support 3.

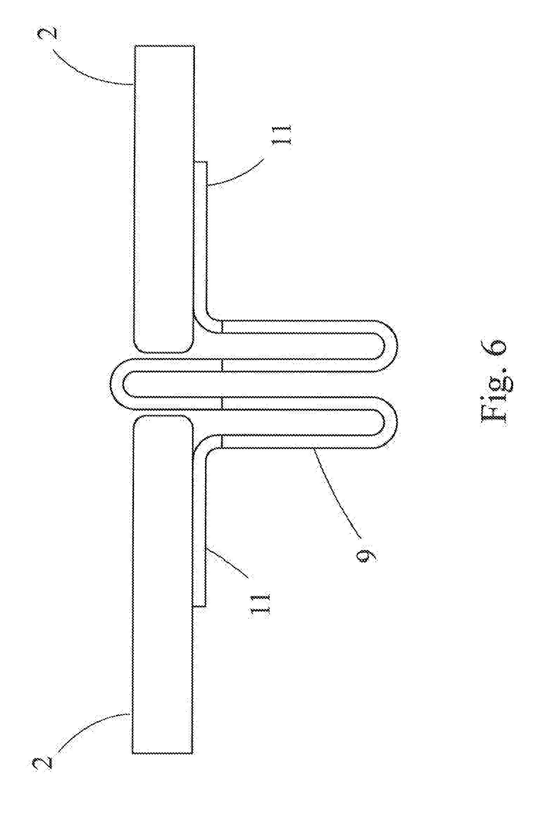

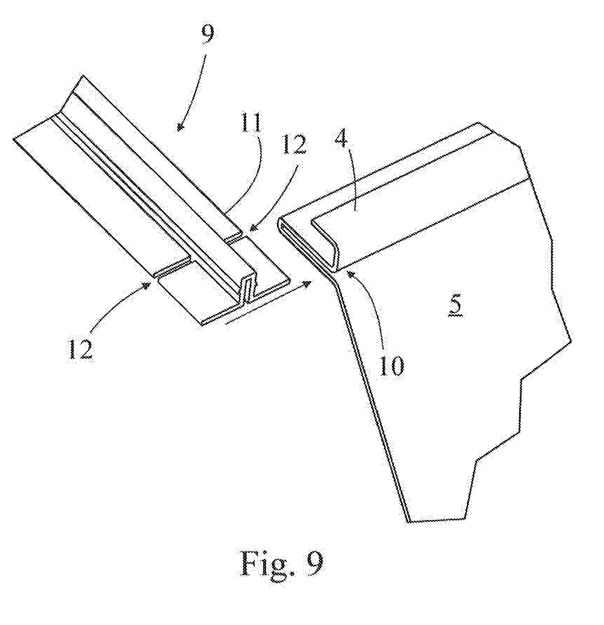

Fig. 6, 7, 8 show interconnecting means 9 for connecting adjacent modules 2 and Fig. 9 shows an embodiment, of how to connect the interconnecting means 9 with the holding means 4.

Fig. 6 shows in a sectional view an embodiment of an interconnecting means 9 having, in a plane, supporting legs 11 which support and thus connect adjacent modules 2. The interconnecting means 9 has a snake-like cross-section with a loop or seam extending above the modules 2. The loop or seam serves to hold the modules 2 at a distance. The seam protruding upward between the modules 2 prevents the edges of adjacent modules 2 from touching each other. It also prevents the interconnecting means 9 from bending under its own weight. Note, that since the U-shaped profiles delimit the movement of the modules 2 in upward direction, this movement does not have to be restricted by the interconnecting means 9.

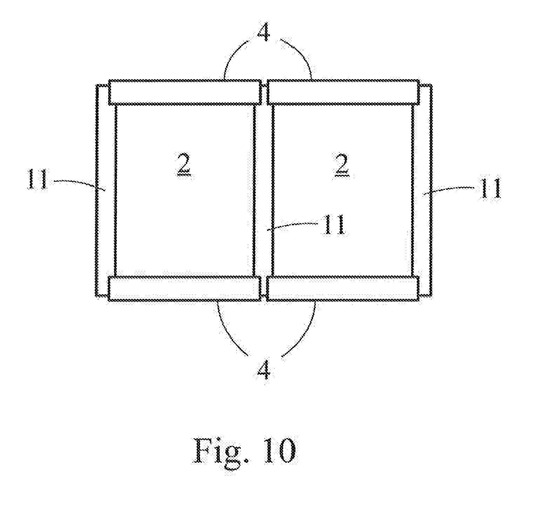

The interconnecting means 9 may also interconnects opposing walls 5 and/or holding means 4 and at the same time serves as a support for the modules 2 on the edges not supported by the holding means 4. The interconnecting means 9 extends within a plane being parallel to the plane of figure 1 between two opposing holding means 4 and is placed between two adjacent modules 2. The arrangement of the interconnecting means 9 also becomes clear from Fig. 9 and 10.

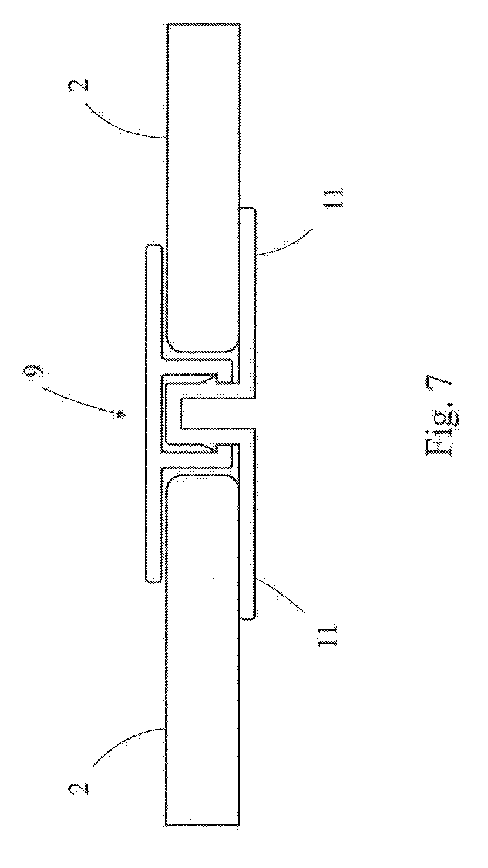

Fig. 7 shows in a sectional view an embodiment of an interconnecting means 9 which laterally interconnects the walls 5 and/or holding means 4 and at the same time serves as a support and holding against wind pull for the modules 2 on the edges not supported by the holding means 4. The interconnecting means 9 comprises two supporting legs 11 extending in opposed directions. The supporting legs 11 are connected by means of an upwardly extending distance holding element. The distance holding element has a clips mechanism for receiving a cover element to be clipped to the distance holding element. The cover element covers the edges of the modules 2.

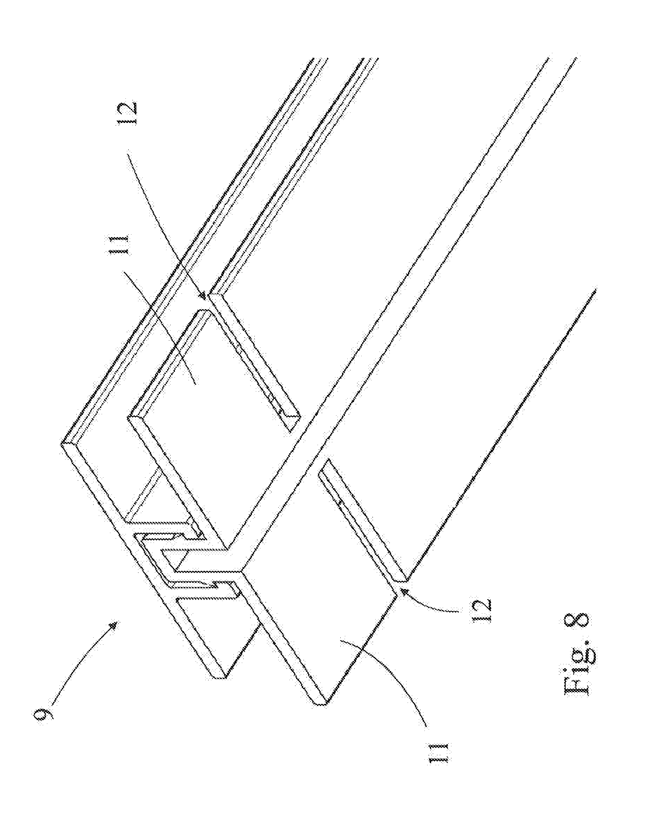

Fig. 8 shows in a bottom view an embodiment of an interconnecting means 9, which possesses an anchoring slit 12 in its supporting legs 11, whereby the slit 12 anchors the supporting legs 11 in the wall 5 or below the U-shaped profile of the holding means 4. A matching indentation has to be provided in the wall 5 or between wall 5 and U-shaped profile. In a preferred embodiment a gap 10 is formed below the U-shaped profile and receives the supporting legs 11 of the interconnecting means 9.

Fig. 9 shows exemplarily, how to laterally mount the interconnecting means 9 to the walls 5 and/or the holding means 4. The inwardly bent portion of the wall 5 forms together with the lower leg of the U-shaped profile a gap 10. The supporting leg 11 of the interconnecting means 9 is inserted into this gap 10 and thus reliably attached to the wall 5 and/or holding means 4.

Fig. 10 shows a cut-out of a multiple module arrangement with interconnecting means 9 and holding means 4 in a top view.

Holding means 4 and corresponding wall 5 of the support 3 may be formed from one piece. However, it is possible that the complete holding device 1 is formed from one piece. A one-pieced sheet metal may be shaped in the desired manner and accordingly bent. In this case the sheet metal is connected at one location by means of welding to form a 3-dimensional support structure in form of a box of preferably four walls as shown in Fig. 3. In another embodiment the one-pieced holding device may be made by a cast element, e.g. from plastics (polymers).

In order to facilitate insertion of the photovoltaic module 2 into the holding means 4 the distance between the legs of the U-shaped profile may be different for opposing holding means 4. For example, the distance of the legs of the left (upper) U-profile may be greater than the distance of the legs of the right (lower) U-profile. This allows insertion under an larger angle.

Another preferred embodiment provides a support 3 which is deformable in the region of the holding means 4 for variably changing the position and/or orientation of the holding means 4. The holding means 4 may be brought into a position or orientation for easily inserting the module 2 into the U-shaped profile. When the module 2 has been inserted the holding means 4 is bent into its original position. It is also possible that the holding means 4 or a part thereof, e.g. one leg of the U-profile, is deformable.

When mounting one or more modules 2 on a holding device 1 the following steps have to be performed: inserting a first edge of the module 2 in a first U-shaped profile of the holding means 4; inserting a second edge of the module 2 in a second U-shaped profile of the holding means 4, the second U-shaped profile being opposed to the first U-shaped profile; partially moving the module 2 from the first U-shaped profile. Preferably, the second edge of the module 2 abuts in its final position on the base of the second U-shaped profile (usually that U-shaped profile which is on the wall having lower height).

As already mentioned above, the U-shaped profiles of the holding means 4 may be positioned and/or oriented prior to inserting the edges of the module 2. This is achieved by a deformable support 3 or a deformable holding means 4.

The invention is described with respect to roof mounting systems, however, the inventive idea is applicable to any other mounting structure, such as a platform, framework, terrace, ground, etc. The invention is also applicable to solar thermal collector modules or a combination of thermal and electric modules, also called hybrid modules.

### List of reference signs

- 1 -: Holding device
- 2 -: Photovoltaic module
- 3 -: Support
- 4 -: Holding means
- 5 -: Wall
- 6 -: Inwardly bent portion of wall 5
- 7 -: Mounting surface
- 8 -: Roof
- 9 -: Interconnecting means
- 10 -: Gap
- 11 -: Supporting leg of interconnecting means
- 12 -: Anchoring slit

## Claims

1. Holding device (1) for holding a photovoltaic module (2) and/or a solar collector module and/or a hybrid module on a structure, such as a roof, platform, base, or framework, the holding device (1) comprising a support (3) and at least one holding means (4) for holding the module (2) on the support (3), wherein the holding means (4) is adapted to receive an edge of the module (2), **characterized in that** the holding means (4) is formed by an U-shaped profile which is an integral part of the support (3).

2. Holding device according to claim 1, wherein the holding device (1) comprises at least two holding means (4) being arranged on the support (3) opposed to each other as to receive opposing edges of a module (2).

3. Holding device according to any of the claims 1 or 2, wherein holding means (4) is continuously formed along the entire length of the support (3).

4. Holding device according to any of the claims 1 or 2, wherein holding means (4) is intermittently formed along the length of the support (3).

5. Holding device according to any of the preceding claims, wherein the support (3) is formed by walls (5) and wherein the holding means (4) extends from the top edge of a wall (5).

6. Holding device according to claim 5, wherein the holding means (4) is formed by one piece with the wall (5) of the support (3).

7. Holding device according to any of the preceding claims, wherein the holding means (4) and the support (3) are formed by one piece.

8. Holding device according to any of the preceding claims, wherein the support (3) is deformable for variably changing the position and/or orientation of the holding means (4), or wherein the holding means (4) or a part thereof is deformable.

9. Holding device according to any of the claims 5 to 8, wherein the wall (5), from which a holding means (4) extends, has in its top region a bent portion (6) and wherein the U-shaped profile of the holding means (4) starts at the end of the bent portion (6) of the wall (5), and wherein preferably the bent portion (6) and the U-shaped profile form a snake-like profile.

10. Holding device according to any of the preceding claims, wherein the holding device (1) comprises at least one interconnecting means (9) for connecting two adjacent modules (2), the interconnecting means (9) preferably having supporting legs (11) for supporting the edges of the adjacent modules (2).

11. Holding device according to claim 10, wherein a gap (10) is formed below the U-shaped profile of the holding means (4) and wherein the interconnecting means (9) may be connected to the holding means (4) by inserting a supporting leg (11) at least partially into the gap (10).

12. Method for mounting at least one photovoltaic module (2) and/or a solar collector module on a holding device (1) according to any of the preceding claims, comprising the steps of: inserting a first edge of the module (2) in a first U-shaped profile of the holding means (4); inserting a second edge of the module (2) in a second U-shaped profile of the holding means (4), the second U-shaped profile being opposed to the first U-shaped profile; partially moving the module (2) from the first U-shaped profile, preferably so that the second edge of the module (2) abuts on the base of the second U-profile.

13. Method according to claim 11, wherein the U-shaped profiles of the holding means (4) are positioned and/or oriented prior to inserting the edges of the module (2).

14. Method according to claim 12 or 13, wherein at least one interconnecting means (9) is used for connecting two adjacent modules (2), the interconnecting means (9) preferably having supporting legs (11) for supporting the edges of the adjacent modules (2).

15. Method according to claim 14, wherein a gap (10) is formed below the U-shaped profile of the holding means (4) and wherein the interconnecting means (9) is connected to the U-shaped profile by inserting a supporting leg (11) at least partially into the gap (10).
